# EUROPÄISCHE PATENTSCHRIFT

(11) **EP 1 215 246 B1**
(45) Veröffentlichungstag und Bekanntmachung des Hinweises auf die Patenterteilung: **09.11.2005**
(21) Anmeldenummer: 01129576.3
(22) Anmeldetag: 12.12.2001
(51) Int. Cl.: C08L 61/28, C09D 161/28, C09D 161/24, C08G 12/40

(54) **Amidosulfonsäure-modifizierte Aminoplast-Vorkondensate als Härter für Aminoplastharze**
Amidosulfonic acid-modified Aminoplast pre-condensate as hardener for aminoplast resins
Précondensat d'aminoplaste modifiés par l'acide amidosulfonique utilisé comme durcisseur pour les résines aminoplastes

(30) Priorität: 14.12.2000 AT 20732000
(43) Veröffentlichungstag der Anmeldung: 19.06.2002
(73) Patentinhaber: AMI Agrolinz Melamine International GmbH, 4020 Linz (AT)
(72) Erfinder: Fürst, Christian, Dipl.-Ing. Dr., 4040 Linz (AT); Hochreiter, Klaus, 4040 Linz (AT)
(74) Vertreter: Gross, Felix

(56) Entgegenhaltungen:
- EP-A- 0 192 106
- EP-A- 0 200 906
- WO-A-93/24582
- DE-A- 3 218 231
- GB-A- 1 027 725

## Beschreibung

Die Erfindung betrifft die Verwendung von amidosulfonsäure-modifizierten Aminoplast-Vorkondensaten als Härter für Aminoplastharze.

Aminoplastharze sind mono- oder niedermolekulare Kondensationsprodukte, sogenannte Vorkondensate einer Amino-, Imino- oder Amidgruppen enthaltenden Komponente, eines sogenannten Aminoplastbildners, mit einer Carbonylverbindung und gegebenenfalls einem Alkanol als Modifizierungsmittel.

Aminoplastharze werden in der Technik in vielfältiger Weise verwendet, beispielsweise für die Herstellung von Formteilen aller Art oder, in Form von Aminoplastharzlösungen, sogenannten Tränkharzen, für die Herstellung von dekorativen Schichtpreßstoffplatten oder zur Beschichtung von Holzfaserplatten.

Bei der Verarbeitung von Aminoplasten werden die löslichen und schmelzbaren Vorkondensate durch Verpressen bei erhöhten Temperaturen und Drücken in unlösliche und unschmelzbare Aminoplastharze umgewandelt.
Die Härtungsgeschwindigkeit muß dabei durch Zusätze von Härtern beschleunigt werden, wobei als Härter vielfach Derivate, wie beispielsweise Salze, Anhydride oder Ester von sowohl organischen als auch anorganischen Säuren oder Säuren als solche verwendet werden. In US 2,377.867 wird beispielsweise Sulfaminsäure als Härter beschrieben.
Besondere Bedeutung haben die sogenannten latenten Härter, die bei Raumtemperatur oder geringfügig erhöhter Temperatur eine nur geringe Härterwirksamkeit zeigen, jedoch bei Verarbeitungstemperatur geringe Mengen einer Säure freisetzen, welche den Härtungsvorgang beschleunigt. Beispiele für solche latenten Härter sind etwa, wie in EP 0000780 beschrieben, Alkyl- oder Alkanolaminsalze der schwefeligen Säure oder gemäß DE 32 18 231 das Diethanolaminsalz der Sulfaminsäure, die in anderer Nomenklatur Amidosulfonsäure genannt ist.

Die Anforderungen an ein gutes Härtungsmittel sind vielfältig und teilweise scheinbar widersprüchlich. Einerseits soll bei Raumtemperatur oder geringfügig erhöhter Temperatur eine nur geringe Härterwirkung auftreten, um die Handhabbarkeit und Lagerfähigkeit der Harzflotten nicht negativ zu beeinflussen. Dieser Anforderung wird durch eine möglichst lange Topfzeit Rechnung getragen. Andererseits soll bei den Verarbeitungsbedingungen die Aushärtung möglichst rasch erfolgen, um beim Verpressen eine qualitativ einwandfreie geschlossenporige Oberfläche zu erzielen. Letzteres wird durch eine möglichst kurze Trübungs- und Gelzeit bei möglichst niedrigen Härtergehalten im Harz gewährleistet.

Die Eigenschaften der bislang bekannten Härtersysteme bzw. die Eigenschaften der mit diesen Härtersystemen ausgehärteten Aminoplastharze sind jedoch in Bezug auf die oben genannten Kriterien nicht immer ausreichend.

Es stellte sich demnach die Aufgabe, ein Härtersystem zu entwickeln, welches den genannten Anforderungen besser als die herkömmlichen Härter gerecht wird.

Unerwarteterweise wurde nun ein Härtersystem entwickelt, welches neben einer raschen Aushärtungszeit eine ausreichend lange Topfzeit besitzt, indem ein Aminoplast-Vorkondensat aus einem Aminoplastbildner und einer Carbonylverbindung, bevorzugt aus Melamin und Formaldehyd oder aus Melamin, Harnstoff und Formaldehyd mit Aminsalzen der Amidosulfonsäure umgesetzt wird.

Gegenstand der vorliegenden Erfindung ist demnach ein Verfahren zum Aushärten von Aminoplastharzen, das dadurch gekennzeichnet ist, daß als latenter Härter ein amidosulfonsäure-modifiziertes Aminoplast-Vorkondensat verwendet wird.

Aminoplastbildner, die zur Herstellung der Aminoplastharze als auch der als Härter verwendeten amidosulfonsäure-modifizierten Aminoplast-Vorkondensate in Betracht kommen, sind beispielsweise Melamin, Harnstoff, Dicyandiamid, Guanamine und substituierte Melamine und Harnstoffe, bevorzugt werden Melamin und Harnstoff verwendet.
Dabei weisen die Aminoplastharze bevorzugt ein molares Verhältnis von Aminoplastbildner zu Carbonylverbindung von 1 : 1,4 bis 1 : 3,0, bevorzugt von 1 : 1,6 bis 1 : 2,0 auf.
Carbonylverbindungen, die für die Umsetzung mit obigen Aminoplastbildnern eingesetzt werden können, sind zum Beispiel Formaldehyd, Acetaldehyd, Isobutyraldehyd, Aceton, Methylethylketon und Diethylketon, bevorzugt wird Formaldehyd verwendet.
Die technisch wichtigsten Aminoplaste werden durch Kondensation der bevorzugten Komponenten Formaldehyd, Melamin und / oder Harnstoff hergestellt.
Aminoplastharze im Sinne der vorliegenden Erfindung sind auch solche, die durch Einkondensieren oder nachträglichen Zusatz von Modifizierungsmitteln erhalten werden. Bekannte Modifizierungsmittel sind beispielsweise Caprolactam, Glykole, Trimethylolpropan, Sorbit, Glucose, Sulfit, Toluolsulfonsäureamide, Carbamate, Salze der Malein- bzw. Fumarsäuremonoamide. Dabei werden die Modifizierungsmittel im allgemeinen in einer Menge von 0,5 - 15 Gew.% zugesetzt.

Die Herstellung des erfindungsgemäßen Härters erfolgt entweder in einer einstufigen Synthese aus einem Aminoplast-Vorkondensat und einem Aminsalz der Amidosulfonsäure oder in einer zweistufigen Synthese aus einem Aminoplastbildner und einer Carbonylverbindung mit anschließender Umsetzung des gebildeten Aminoplast-Vorkondensates mit einem Aminsalz der Amidosulfonsäure.
Das Molverhältnis Aminoplastbildner : Carbonylverbindung im Aminoplast-Vorkondensat beträgt dabei 1 : 1 bis 1 : 6, bevorzugt 1 : 2 bis 1 : 6.
Das Molverhältnis des Aminsalzes der Amidosulfonsäure zu den im Aminoplast-Vorkondensat enthaltenen Hydroxymethylgruppen beträgt beispielsweise 0,05 : 1 bis 1 : 1, bevorzugt 0,95 : 1 bis 1 : 1.

Als Aminkomponente des Amidosulfonsäuresalzes können beispielsweise primäre, sekundäre oder tertiäre aliphatische oder cyklische Alkyl- oder Alkanolamine oder Aminotriazine verwendet werden. Beispiele für solche Amine sind unter anderem Ethanolamin, Diethanolamin, Morpholin, Ammoniak, Diethylamin, Triethylamin, Triethanolamin oder Melamin.
Die zur ausreichenden Beschleunigung der Härtung erforderliche Härtermenge beträgt 0,05 - 3 Gew.%, bevorzugt 0,1 - 1,5 Gew.%, bezogen auf den Festharzanteil.

Die Aushärtung von Aminoplastharzen erfolgt meist bei Temperaturen über 70 °C. Bei Zugabe einer Säure verläuft sie sehr schnell. Dabei liegt der ideale pH-Wert für die Härtungsreaktion im Bereich von etwa 4 - 6,5.
Unerwarteterweise erfolgt bei der Herstellung des erfindungsgemäßen Härters durch Modifizierung von Aminoplast-Vorkondensaten mit Aminsalzen der Amidosulfonsäure bei 90 - 95 °C keine Aushärtung, auch wenn der pH-Wert bei der Umsetzung zwischen 5,5 und 6,5 liegt. Hingegen wird unerwarteterweise ein stabiles, flüssiges, mit Wasser in allen Verhältnissen mischbares Produkt erhalten, das nach Einstellung des pH-Wertes auf einen Wert von etwa pH 7 - 14, bevorzugt auf einen Wert von etwa pH 8 - 8,5 uneingeschränkt als latenter Härter für Aminoplastharze eingesetzt werden kann.
Im Vergleich mit herkömmlichen Härtersystemen zeichnet sich das erfindungsgemä-βe Produkt darüberhinaus dadurch aus, daß damit hergestellte Harzflotten bei gleich guten bis besseren Härtungseigenschaften wesentlich bessere Stabilitätseigenschaften besitzen.

Die mit dem erfindungsgemäßen Härter ausgehärteten Aminoplastharze können jeder für herkömmliche Aminoplastharze bekannten Verwendung zugeführt werden.

### Beispiele

### Beispiel 1 - einstufige Synthese

1412 g wäßrige Diethanolaminsulfamat-Lösung (6 Mol; 84,7 Gew.%; pH 5,6) wird in einem 2 Liter Dreihalskolben mit Rückflußkühler, Thermometer und Heizung unter Rühren auf 90 °C erhitzt. Nach Erreichen der Temperatur werden 306 g Hexamethylolmelamin (1 Mol) zügig zugegeben. Die anfänglich dicke Suspension wird schnell dünnflüssiger, und schließlich löst sich alles. Es wird noch ca. 60 bis 90 Minuten bei 90 °C weiterkondensiert. Der Gehalt an Hydroxymethylgruppen im Produkt wird mittels iodometrischer Titration verfolgt. Am Ende ist der Gehalt der Hydroxymethylgruppen im Produkt < 0,3 Gew.%. Es wird eine auch nach dem Abkühlen stabile, viskose, nicht kristallisierende, verdünnbare Lösung mit einem Gehalt an Produkt von 80,9 Gew.% erhalten, die nach dem Einstellen des pH-Wertes auf 8,4 als latenter Härter für Aminoplastharze eingesetzt werden kann.
In analoger Weise wurden Härter mit Morpholinsulfamat, Ammoniumsulfamat, Diethylaminsulfamat, Triethylaminsulfamat, Ethanolaminsulfamat, Triethanolaminsulfamat und Melamin hergestellt.

### Beispiel 2 - zweistufige Synthese

126 g Melamin (1 Mol) und 500 g 36 % Formaldehyd (6 Mol) werden bei pH 8 in einem 2 Liter Dreihalskolben mit Rückflußkühler, Thermometer und Heizung unter Rühren auf 90 - 95 °C erhitzt. Sobald sich alles gelöst hat wird noch 5 Minuten weiterkondensiert. Dann werden 1412 g wäßrige, auf 90 °C vorgeheizte Diethanolaminsulfamat-Lösung (6 Mol; 84,7 Gew.%; pH 5,6) rasch zugegeben. Hierbei erfolgt keine Änderung des Aussehens. Es wird noch ca. 60 bis 90 Minuten bei 90 °C weiterkondensiert. Der Gehalt an Hydroxymethylgruppen im Produkt wird mittels iodometrischer Titration verfolgt. Am Ende ist der Gehalt der Hydroxymethylgruppen im Produkt < 0,3 Gew.%. Es wird eine auch nach dem Abkühlen stabile, viskose, nicht kristallisierende, verdünnbare Lösung mit einem Gehalt an Produkt von 71 Gew.% erhalten, die nach dem Einstellen des pH-Wertes auf 8,4 als latenter Härter für Aminoplastharze eingesetzt werden kann.
In analoger Weise wurden Härter mit Morpholinsulfamat, Ammoniumsulfamat, Diethylaminsulfamat, Triethylaminsulfamat, Ethanolaminsulfamat, Triethanolaminsulfa**mat und Melamin hergestellt.**

### Beispiel 3 - Anwendung

Zu 1000 g einer 50 Gew.% Lösung eines modifizierten Melamin-Formaldehydharzes mit einem Melamin / Formaldehyd-Verhältnis von 1 : 1,65 und einem Gehalt von 1,5 Gew.% Caprolactam und 9 Gew.% Trimethylopropan werden 0,8 Gew.%, bezogen auf die Harzlösung, einer erfindungsgemäß hergestellten Härterlösung aus Beispiel 2 zugegeben. Die Trübungszeit beträgt 5,5 Minuten. Die Topfzeit ist größer als 24 Stunden. Die Harzlösung wird beispielsweise zum Herstellen von imprägnierten Papieren verwendet.

### Beispiel 4 - Trübungs-, Gel- und Topfzeiten

Es wurden Mischungen unterschiedlicher Härter mit einer 50%igen Lösung eines Melamin-Formaldehyd-Tränkharzes hergestellt und die Trübungs-, Gel- und Topfzeiten der so erhaltenen Harzflotten ermittelt, wobei die pH-Werte der Härterlösungen einheitlich auf 8,4 gestellt wurden.
Es wurden Versuche mit unterschiedlicher Härterkonzentration in der Harzflotte durchgeführt.
Die Trübungs- und Gelzeiten wurden bei Standardbedingungen, d.h. 100 °C, die Topfzeiten aus dem Verlauf der Viskosität bei 40 °C bestimmt.

| Härterkonzentration [Gew.%] | Trübungszeit Mittelwert aus zwei Bestimmungen [min] | Gelzeit Mittelwert aus zwei Bestimmungen [min] | Topfzeit bei 40 °C [min] |
|---|---|---|---|
| A | Standardhärter Morpholinsalz der Toluolsulfonsäure | | |
| 0,3 | 6,3 | 12,7 | --- |
| 0,5 | 5 | 8,8 | --- |
| 0,8 | 4,2 | 8 | 106 |
| 2,5 | 3,8 | 5,9 | 48 |

| B | Ethanolaminsalz der Amidosulfonsäure | | |
|---|---|---|---|
| 0,3 | 171 | 355 | --- |
| 0,5 | 170 | --- | --- |
| 0,8 | 162 | --- | --- |

| C | Hexamethylolmelamin + Ethanolaminsalz der Amidosulfonsäure | | |
|---|---|---|---|
| 0,3 | 6,7 | 12,3 | --- |
| 0,5 | 5,7 | 9,8 | --- |
| 0,8 | 4,7 | 8 | 120 |

| D | Diethanolaminsalz der Amidosulfonsäure | | |
|---|---|---|---|
| 0,8 | 5,4 | 9,1 | 240 |
| 2,5 | 4,3 | 7,3 | 130 |

| E | Hexamethylolmelamin + Diethanolaminsalz der Amidosulfonsäure | | |
|---|---|---|---|
| 0,8 | 5,6 | 9,8 | 270 |
| 2,5 | 4,4 | 7,4 | 150 |

## Patentansprüche

1. Verfahren zum Aushärten von Aminoplastharzen, **dadurch gekennzeichnet, daß** als latenter Härter ein amidosulfonsäure-modifiziertes Aminoplast-Vorkondensat verwendet wird.

2. Verfahren nach Anspruch 1, **dadurch gekennzeichnet, daß** der latente Härter aus einem Kondensat eines Aminsalzes der Amidosulfonsäure mit einem Aminoplast-Vorkondensat besteht.

3. Verfahren nach Anspruch 2, **dadurch gekennzeichnet, daß** als Aminsalze der Amidosulfonsäure die Salze von primären, sekundären oder tertiären aliphatischen oder cyklischen Alkyl- oder Alkanolaminen oder von Aminotriazinen verwendet werden.

4. Verfahren nach Anspruch 2, **dadurch gekennzeichnet, daß** als Aminoplast-Vorkondensat ein Melamin-Formaldehyd- oder ein Harnstoff-Melamin-Formaldehyd-Harz verwendet wird.

5. Verfahren nach Anspruch 2, **dadurch gekennzeichnet, daß** das Aminoplast-Vorkondensat ein Molverhältnis von Aminoplastbildner zur Carbonylverbindung von 1 : 1 bis 1 : 6, bevorzugt von 1 : 2 bis 1 : 6 aufweist.

6. Verfahren nach Anspruch 2, **dadurch gekennzeichnet, daß** das molare Verhältnis des Aminsalzes der Amidosulfonsäure zu den im Aminoplast-Vorkondensat enthaltenen Hydroxymethylgruppen 0,05 : 1 bis 1 : 1, bevorzugt 0,95 : 1 bis 1 : 1 beträgt.

7. Verfahren nach Anspruch 2, **dadurch gekennzeichnet, daß** die Herstellung des latenten Härters durch Umsetzen eines Aminsalzes der Amidosulfonsäure mit einem Aminoplast-Vorkondensat erfolgt.

8. Verfahren nach Anspruch 2, **dadurch gekennzeichnet, daß** die Herstellung des latenten Härters durch Umsetzen eines Aminoplastbildners mit einer Carbonylverbindung und anschließender Reaktion des gebildeten Aminoplast-Vorkondensates mit einem Aminsalz der Amidosulfonsäure erfolgt.

9. Verfahren nach Anspruch 1, **dadurch gekennzeichnet, daß** die auszuhärtenden Aminoplastharze ein Molverhältnis von Aminoplastbildner zu Carbonylverbindung von 1 1,4 bis 1 : 3,0, bevorzugt von 1 : 1,6 bis 1 : 2,0 aufweisen.

10. Verfahren nach Anspruch 1, **dadurch gekennzeichnet, daß** die auszuhärtenden Aminoplastharze Modifizierungsmittel in einer Menge von 0,5 - 15 Gew.% enthalten.

11. Verfahren nach Anspruch 1, **dadurch gekennzeichnet, daß** der latente Härter in einer Menge von 0,05 - 3 Gew.%, bevorzugt von 0,1 - 1,5 Gew.%, bezogen auf den Festharzanteil, eingesetzt wird.

12. Mit Hilfe eines amidosulfonsäure-modifizierten Aminoplast-Vorkondensates ausgehärtetes Aminoplastharz.

## Claims

1. Process for curing aminoplast resins, **characterized in that** an amidosulphonic acid-modified aminoplast precondensate is used as a latent curing agent.

2. Process according to Claim 1, **characterized in that** the latent curing agent consists of a condensate of an amine salt of the amidosulphonic acid with an aminoplast precondensate.

3. Process according to Claim 2, **characterized in that** the salts of primary, secondary or tertiary aliphatic or cyclic alkyl- or alkanolamines or of aminotriazines are used as amine salts of the amidosulphonic acid.

4. Process according to Claim 2, **characterized in that** a melamine-formaldehyde or urea-melamine-formaldehyde resin is used as the aminoplast precondensate.

5. Process according to Claim 2, **characterized in that** the aminoplast precondensate has a molar ratio of aminoplast former to carbonyl compound of 1:1 to 1:6, preferably of 1:2 to 1:6.

6. Process according to Claim 2, **characterized in that** the molar ratio of the amine salt of the amidosulphonic acid to the hydroxymethyl groups contained in the aminoplast precondensate is 0.05:1 to 1:1, preferably 0.95:1 to 1:1.

7. Process according to Claim 2, **characterized in that** the preparation of the latent curing agent is effected by reaction of an amine salt of the amidosulphonic acid with an aminoplast precondensate.

8. Process according to Claim 2, **characterized in that** the preparation of the latent curing agent is effected by reaction of an aminoplast former with a carbonyl compound and subsequent reaction of the resulting aminoplast precondensate with an amine salt of the amidosulphonic acid.

9. Process according to Claim 1, **characterized in that** the aminoplast resins to be cured have a molar ratio of aminoplast former to carbonyl compound of 1:1.4 to 1:3.0, preferably of 1:1.6 to 1:2.0.

10. Process according to Claim 1, **characterized in that** the aminoplast resins to be cured contain modifiers in an amount of 0.5-15% by weight.

11. Process according to Claim 1, **characterized in that** the latent curing agent is used in an amount of 0.05-3% by weight, preferably of 0.1-1.5% by weight, based on the proportion of solid resin.

12. Aminoplast resin cured with the aid of an amidosulphonic acid-modified aminoplast precondensate.

## Revendications

1. Procédé pour le durcissement d'aminoplastes, **caractérisé en ce qu'**on utilise comme durcisseur latent un produit de pré-condensation aminoplaste modifié par de l'acide amidosulfonique.

2. Procédé selon la revendication 1, **caractérisé en ce que** le durcisseur latent consiste en un produit de condensation d'un sel d'amine de l'acide amidosulfonique avec un produit de pré-condensation aminoplaste.

3. Procédé selon la revendication 2, **caractérisé en ce qu'**on utilise comme sels d'amines de l'acide amidosulfonique les sels d'alkyl- ou alcanolamines primaires, secondaires ou tertiaires aliphatiques ou cycliques ou d'aminotriazines.

4. Procédé selon la revendication 2, **caractérisé en ce qu'**on utilise comme produit de pré-condensation aminoplaste une résine mélamine-formaldéhyde ou une résine urée-mélamine-formaldéhyde.

5. Procédé selon la revendication 2, **caractérisé en ce que** le produit de pré-condensation aminoplaste présente un rapport molaire du générateur d'aminoplaste au composé carbonyle allant de 1:1 à 1:6, de préférence de 1:2 à 1:6.

6. Procédé selon la revendication 2, **caractérisé en ce que** le rapport molaire du sel d'amine de l'acide amidosulfonique aux groupes hydroxy-méthyle contenus dans le produit de pré-condensation aminoplaste va de 0,05:1 à 1:1, de préférence de 0,95:1 à 1:1.

7. Procédé selon la revendication 2, **caractérisé en ce que** la préparation du durcisseur latent s'effectue par réaction d'un sel d'amine de l'acide amidosulfonique avec un produit de pré-condensation aminoplaste.

8. Procédé selon la revendication 2, **caractérisé en ce que** la préparation du durcisseur latent s'effectue par réaction d'un générateur d'aminoplaste avec un composé carbonyle et réaction subséquente du produit de pré-condensation aminoplaste formé avec un sel d'amine de l'acide amidosulfonique.

9. Procédé selon la revendication 1, **caractérisé en ce que** les aminoplastes à durcir présentent un rapport molaire du générateur d'aminoplaste au composé carbonyle allant de 1:1,4 à 1:3,0, de préférence de 1:1,6 à 1:2,0.

10. Procédé selon la revendication 1, **caractérisé en ce que** les aminoplastes à durcir contiennent des agents modificateurs en une quantité de 0,5 à 15 % en poids.

11. Procédé selon la revendication 1, **caractérisé en ce que** le durcisseur latent est utilisé en une quantité de 0,05 à 3 % en poids, de préférence de 0,1 à 1,5 % en poids, par rapport à la quantité de résine solide.

12. Aminoplaste durci à l'aide d'un produit de pré-condensation aminoplaste modifié avec de l'acide amidosulfonique.
